# EUROPEAN PATENT APPLICATION

(11) **EP 3 079 367 A1**
(43) Date of publication of application: **12.10.2016**
(21) Application number: 14867062.3
(22) Date of filing: 17.04.2014
(51) Int. Cl.: H04N 21/235, H04N 21/435

(54) **RELAY APPARATUS, COOPERATIVE SYSTEM, DELIVERY APPARATUS, PROCESSING METHOD OF RELAY APPARATUS, AND PROGRAM**

(30) Priority: 02.12.2013 JP 2013248867
(71) Applicant: Panasonic Intellectual Property Management Co., Ltd., Osaka-shi, Osaka 570-6207 (JP)
(72) Inventor: KAGEYAMA, Mitsuhiro, Chuo-ku, Osaka-shi Osaka 540-6207 (JP); FUKUDA, Chikara, Chuo-ku, Osaka-shi Osaka 540-6207 (JP)
(74) Representative: Grünecker Patent- und Rechtsanwälte PartG mbB
(86) International application number: PCT/JP2014/002183
(87) International publication number: WO 2015/083299

(57) **Abstract**

A repeating device is made up of a viewing state determining unit that determines a viewing state of a program in a receiving device, an acquiring unit that acquires command information and additional data for rendering operation related to the program of a rendering device, and an interlocking controller that determines whether or not the command information and the additional data are to be transmitted to the rendering device, based on a determination result of the viewing state determining unit.

## Description

### TECHNICAL FIELD

The present disclosure relates to a repeating device, an interlocking system, a distribution device, and a processing method of the repeating device that enable interlocking operation of a rendering device while providing an incentive in accordance with a viewing result of a program content.

### BACKGROUND ART

There has been disclosed a configuration in which an electronic music device is interlocked in tune with an on-air program (e.g., refer to PTL 1).

### Citation List

### Patent Literature

PTL 1: Japanese Patent No. 5012097

### SUMMARY OF THE INVENTION

An interlocking system according to the present disclosure is an interlocking system made up of a distribution device, a receiving device, a repeating device, and a rendering device, the distribution device including a program distributor that distributes a program content, a command distributor that transmits command information for rendering operation of the rendering device, the command information being related to the program content, and an additional data distributor that distributes additional data related to the command information, the receiving device including a receiver that receives the program content, and a viewing state notifier that transmits a program viewing state, the repeating device including a viewing state determining unit that determines the program viewing state of the receiving device, an acquiring unit that acquires the command information and the additional data for the rendering operation related to the program of the rendering device, and an interlocking controller that determines whether or not the command information and the additional data are to be transmitted to the rendering device, based on a determination result of the viewing state determining unit, and the rendering device including a command controller that receives and executes the command information and the additional data.

This configuration enables the interlocking system according to the present disclosure to change whether or not the rendering operation of the rendering device is to be performed, based on the viewing state of the program, and can promote the program viewing by a user.

### BRIEF DESCRIPTION OF DRAWINGS

FIG. 1 is a configuration diagram of an entire interlocking system according to a first exemplary embodiment.
FIG. 2 is a diagram for describing a sequence of the entire interlocking system according to the first exemplary embodiment.
FIG. 3 is a flowchart for describing operation of a receiving device according to the first exemplary embodiment.
FIG. 4A is a diagram showing one example of program information according to the first exemplary embodiment.
FIG. 4B is a diagram showing another example of the program information according to the first exemplary embodiment.
FIG. 5 is a flowchart for describing operation of a repeating device according to the first exemplary embodiment.
FIG. 6A is a diagram showing one example of a viewing result according to the first exemplary embodiment.
FIG. 6B is a diagram showing another example of the viewing result according to the first exemplary embodiment.
FIG. 7A is a diagram showing one example of command information according to the first exemplary embodiment.
FIG. 7B is a diagram showing another example of the command information according to the first exemplary embodiment.
FIG. 8 is a diagram showing one example of a rendering operation result according to the first exemplary embodiment.
FIG. 9 is a flowchart for describing operation of a rendering device according to the first exemplary embodiment.
FIG. 10 is a configuration diagram of another entire interlocking system according to the first exemplary embodiment.
FIG. 11 is a flowchart for describing operation of another receiving device according to the first exemplary embodiment.
FIG. 12 is a configuration diagram of an entire interlocking system according to a second exemplary embodiment.
FIG. 13 is a diagram for describing a sequence of the entire interlocking system according to the second exemplary embodiment.
FIG. 14 is a flowchart for describing operation of a receiving device according to the second exemplary embodiment.
FIG. 15 is a flowchart for describing operation of a repeating device according to the second exemplary embodiment.
FIG. 16A is a diagram showing one example of a viewing result and a rendering operation result according to the second exemplary embodiment.
FIG. 16B is a diagram showing another example of the viewing result and the rendering operation result according to the second exemplary embodiment.
FIG. 17 is a diagram for describing a sequence of benefit acquisition according to the second exemplary embodiment.
FIG. 18 is a diagram for describing a user interface of the benefit acquisition according to the second exemplary embodiment.

### DESCRIPTION OF EMBODIMENTS

Hereinafter, with reference to the drawings as needed, an exemplary embodiment will be described in detail. However, an unnecessary detailed description may be omitted. For example, a detailed description of a well-known item and a redundant description of substantially the same configuration may be omitted. This is to avoid unnecessary redundancy in the following description and to facilitate understanding of those in the art.

The accompanying drawings and the following description are provided for those in the art to sufficiently understand the present disclosure, and are not intended to limit the subject of claims.

### FIRST EXEMPLARY EMBODIMENT

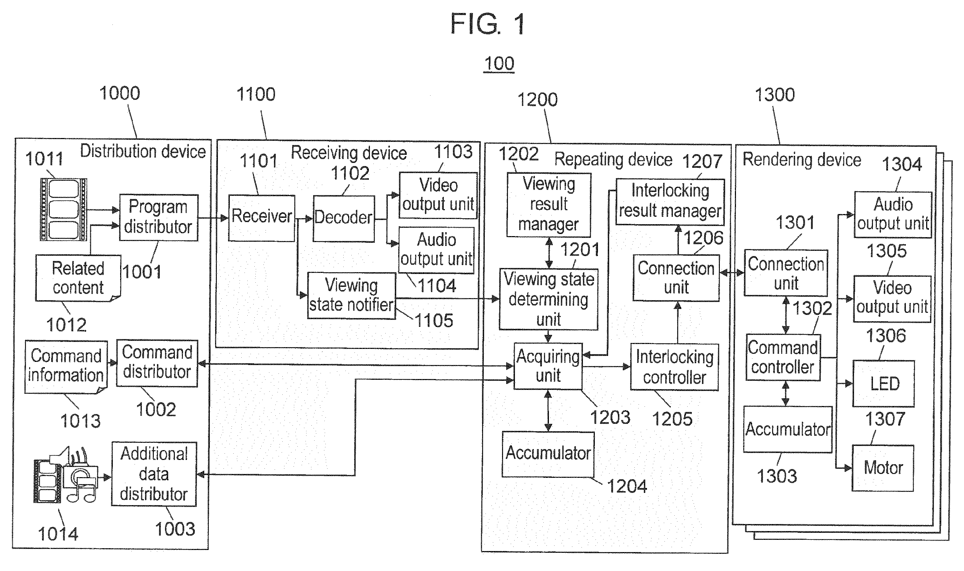

Hereinafter, with reference to FIGS. 1 to 11, a first exemplary embodiment will be described.

### [1-1. Configuration]

FIG. 1 is a configuration diagram of an entire interlocking system according to the first exemplary embodiment.

Interlocking system 100 is made up of distribution device 1000, receiving device 1100, repeating device 1200, and rendering device 1300.

Distribution device 1000 is made up of program distributor 1001, command distributor 1002, and additional data distributor 1003.

Program distributor 1001 distributes, to receiving device 1100, program content 1011 made of encoded video and audio, and related content 1012 related to program content 1011, the related content 1012 being described in an HTML (Hyper Text Markup Language) format or in a BML (Broadcast Markup Language) format.

Command distributor 1002 distributes command information 1013 to repeating device 1200. Command information 1013 is information of commands required for rendering device 1300 performing interlocking operation, and the like.

Additional data distributor 1003 distributes additional data 1014 in response to a request of repeating device 1200. Additional data 1014 is a still picture file of a JPEG (Joint Photographic Experts Group) system, in a PNG (Portable Network Graphics) format or the like, a video stream file in an MOV format, which is a file format of a moving image of QuickTime (registered trademark), or in a TS (Transport Stream) format, or an audio file in an AAC (Advanced Audio Coding) format, in an MP3 (MPEG Audio Layer-3) format or the like. Additional data 1014 is data that is referred to when the command of command information 1013 is executed in rendering device 1300.

Distribution device 1000 is connected to receiving device 1100 and repeating device 1200 by a broadcast wave and by IP communication, respectively.

Receiving device 1100 is, for example, a TV receiver. Receiving device 1100 is made up of receiver 1101, decoder 1102, video output unit 1103, audio output unit 1104, and viewing state notifier 1105.

Receiver 1101 receives program content 1011 and related content 1012 from distribution device 1000.

Decoder 1102 decodes program content 1011 received in receiver 1101 to output the same as video data and audio data.

Video output unit 1103 outputs the video data decoded in decoder 1102 as video.

Audio output unit 1104 outputs the audio data decoded in decoder 1102 as audio.

Viewing state notifier 1105 reads related content 1012 received in receiver 1101 and acquires program information described in related content 1012 to transmit the same to repeating device 1200. In the present exemplary embodiment, a description will be given on the assumption that related content 1012 is a content described in the HTML format, that viewing state notifier 1105 is an HTML browser, and that receiving device 1100 and repeating device 1200 are connected by the IP (Internet Protocol) communication.

Repeating device 1200 is, for example, a smartphone, a tablet terminal or the like. Repeating device 1200 is made up of viewing state determining unit 1201, viewing result manager 1202, acquiring unit 1203, accumulator 1204, interlocking controller 1205, connection unit 1206, and interlocking result manager 1207.

Viewing state determining unit 1201 receives the program information received from viewing state notifier 1105 of receiving device 1100 to determine a viewing state from the received program information. A determination result is output to acquiring unit 1203 and viewing result manager 1202.

Viewing result manager 1202 specifies a program under viewing, based on the determination result of the viewing result to manage the viewing result of the program.

For the program under viewing, based on the determination result of the viewing state, acquiring unit 1203 receives command information 1013 and additional data 1014 required for the interlocking operation of rendering device 1300 from command distributor 1002 and additional data distributer 1003 of distribution device 1000, respectively.

Accumulator 1204 accumulates received command information 1013 and additional data 1014.

Interlocking controller 1205 controls execution of the interlocking operation of rendering device 1300, and issues a command for the interlocking operation to rendering device 1300.

Connection unit 1206 establishes connection to rendering device 1300 to transmit the command for the interlocking operation of rendering device 1300, and additional data 1014 corresponding to the command, and to receive a rendering operation result from rendering device 1300. Here, communication means between repeating device 1200 and rendering device 1300 is not limited. For example, repeating device 1200 and rendering device 1300 may be connected by a wireless communication system such as Bluetooth (registered trademark) and Wi-Fi (registered trademark) (Wireless Fidelity), or may be connected through a wired channel such as a USB (Universal Serial Bus) and a serial bus cable.

Interlocking result manager 1207 manages the rendering operation result received from rendering device 1300.

Rendering device 1300 is, for example, a toy or the like related to program content 1011, and more specifically, a toy imitating gadgetry, a weapon or the like that a hero or a heroine of the program wears. Thus, rendering device 1300 includes, for example, a speaker to output the audio, a small display to output the video, a light-emitting part that realizes light production rendering, and a movable part driven by a motor, and so on.

Rendering device 1300 is made up of connection unit 1301, command controller 1302, accumulator 1303, audio output unit 1304, video output unit 1305, LED 1306, and motor 1307.

Connection unit 1301 is connected to repeating device 1200 to receive a command and additional data 1014, and transmit the rendering operation result.

Command controller 1302 controls the execution of the command received by connection unit 1301.

Accumulator 1303 accumulates additional data 1014 used during the execution of the command.

Audio output unit 1304, video output unit 1305, LED 1306, and motor 1307 are controlled by command controller 1302, and the data is output to video output unit 1305 when the video is output in the interlocking operation during the command execution, is output to audio output unit 1304 when the audio is output, is output to LED 1306 when light production is performed, and is output to motor 1307 when physical output such as vibration is performed.

Audio output unit 1304, video output unit 1305, LED 1306, and motor 1307 are examples of the present exemplary embodiment, and not essential components, and a software application may be included.

### [1-2. Operation]

Operation of interlocking system 100 configured as described above will be described below.

### [1-2-1. Sequence of Entire Interlocking System]

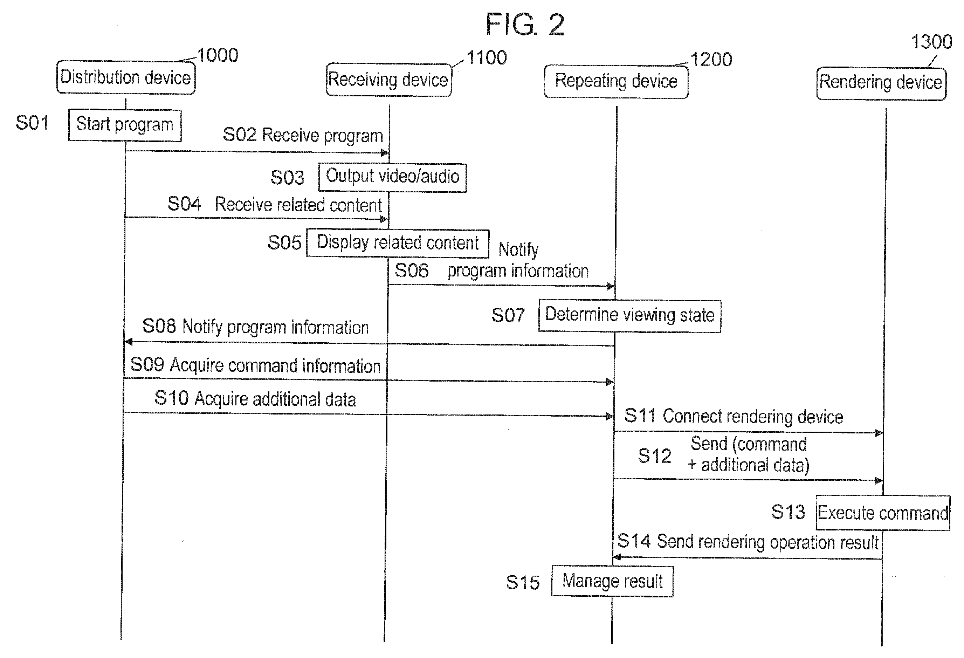

FIG. 2 is a diagram for describing a sequence of the entire interlocking system of the present exemplary embodiment.

(S01) Distribution device 1000 prepares program content 1011 to be broadcasted, related content 1012, command information 1013, and additional data 1014 to start the distribution. For example, program content 1011 is distributed by a broadcast wave from a broadcasting server. Related content 1012, being a content described in the HTML format, is distributed from a WEB server by the IP communication. The distribution is performed by program distributor 1001. Moreover, command information 1013 and additional data 1014 are prepared in the WEB server.

(S02) Receiving device 1100 receives, in receiver 1101, program content 1101 distributed by distribution device 1000.

(S03) Received program content 1101 is decoded in decoder 1102 to output as the video data and the audio data. The video data is output to video output unit 1103. The audio data is output to audio output unit 1104.

(S04) Receiving device 1100 receives related content 1012 distributed by distribution device 1000 at the same time as the reception of program content 1011.

(S05) Received related content 1012 is displayed, using an HTML browser.

(S06) Upon receiving program content 1011 and related content 1012, viewing state notifier 1105 of receiving device 1100 notifies viewing state determining unit 1201 of repeating device 1200 of the program information. The notification of the program information is periodically performed at a predetermined timing during the program viewing, that is, while program content 1011 and related content 1012 are being received.

(S07) Upon receiving the notification of the program information from viewing state notifier 1105 of receiving device 1100, viewing state determining unit 1201 of repeating device 1200 determines what the program being viewed is, and whether or not the interlocking operation corresponding to the program is present.

(S08) If as the determination result of viewing state determining unit 1201, it is determined that the interlocking operation is present, acquiring unit 1203 notifies distribution device 1000 of the program information to specify the program under viewing.

(S09) Command distributor 1002 of distribution device 1000 sends command information 1013 to acquiring unit 1203.

(S10) Moreover, additional data distributor 1003 of distribution device 1000 sends additional data 1014 to acquiring unit 1203.

(S11) Next, repeating device 1200 specifies connectable rendering device 1300 from received command information 1013, and searches for rendering device 1300 to connect the same.

(S12) When the connection to rendering device 1300 is completed, the command to be sent to rendering device 1300 is acquired from command information 1013, and timer setting and the like are performed so as to be able to execute the command at the command execution time. When the execution time approaches, additional data 1014 corresponding to the command is issued from connection unit 1206 to rendering device 1300.

(S13) When connection unit 1301 of rendering device 1300 receives the command and additional data 1014 from repeating device 1200, command controller 1302 executes the command.

(S14) A notification of the rendering operation result, which is a result of having executing the command, is sent from connection unit 1301 to repeating device 1200.

(S15) Connection unit 1206 of repeating device 1200, which has received the rendering operation result, sends the result to interlocking result manager 1207 to manage the result therein.

When the information notified from viewing state notifier 1105 of receiving device 1100 is not reached for a predetermined time, and is timed out, viewing state determining unit 1201 of repeating device 1200 releases setting of the command being executed in rendering device 1300.

Next, details of operation in each of receiving device 1100, repeating device 1200, and rendering device 1300 will be described.

### [1-2-2. Operation of Receiving Device]

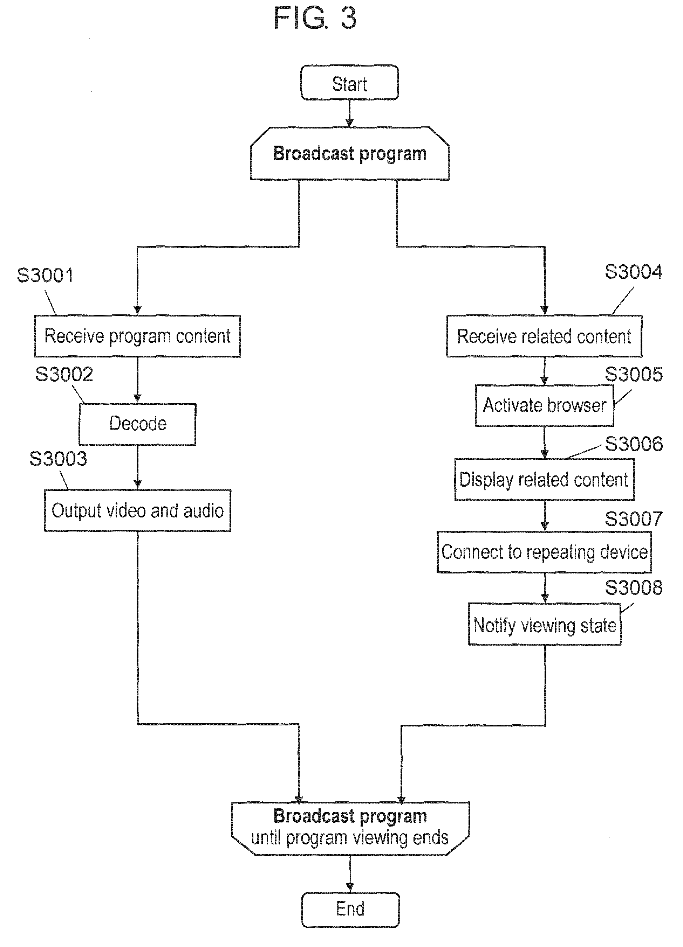

FIG. 3 is a flowchart for describing the operation of receiving device 1100.

(S3001) Receiving device 1100 receives program content 1011 in receiver 1101 from program distributor 1001 of distribution device 1000.

(S3002) Received program content 1011 is decoded in decoder 1102 to obtain the video data and the audio data.

(S3003) The video data is output from video output unit 1103. The audio data is output from audio output unit 1104.

(S3004) Receiving device 1100 receives related content 1012 in receiver 1101 from program distributor 1001 of distribution device 100.

(S3005) Since received related content 1012 is the content described in the HTML format, the HTML browser is activated.

(S3006) Related content 1012 is displayed in the activated HTML browser.

(S3007) Related content 1012 is the content described in the HTML format, and in related content 1012, a script to send the program information of the program being received to repeating device 1200 is programmed. In accordance with this script, viewing state notifier 1105 of receiving device 1100 connects to viewing state determining unit 1201 of repeating device 1200.

(S3008) Furthermore, in accordance with this script, the program information is transmitted from viewing state notifier 1105 to viewing state determining unit 1201 at the predetermined timing.

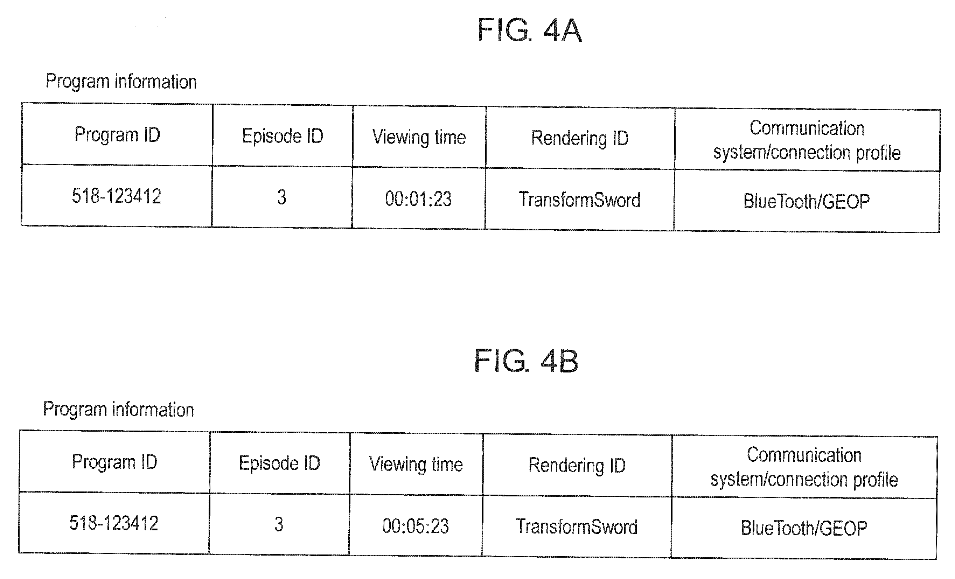

FIG. 4A is a diagram showing one example of the program information. The program information is made up of a program ID for identifying the program under viewing, an episode ID indicating an episode number of the program when the program is a series, a viewing time of the program being currently viewed, a rendering ID that specifies rendering device 1300 to perform the interlocking operation, and a communication system for connecting rendering device 1300. The one example of the program information in FIG. 4A indicates that the program ID is "518-123412", the episode ID is "3", that is, a third episode, the viewing time is "00:01:23", which indicates that the viewing time is 1 minute 23 seconds, the rendering ID is "TransformSword", and the communication system for connecting rendering device 1300 is "Bluetooth (registered trademark)", and further, a connection profile for equipment connection is "GEOP (Generic Object Exchange Profile)".

While the viewing time is the time under viewing in the one example of the program information in FIG. 4A, a time of day when viewing is performed may be indicated.

The operation from S3001 to S3008 is repeatedly carried out from viewing start to viewing end.

### [1-2-3. Operation of Repeating Device]

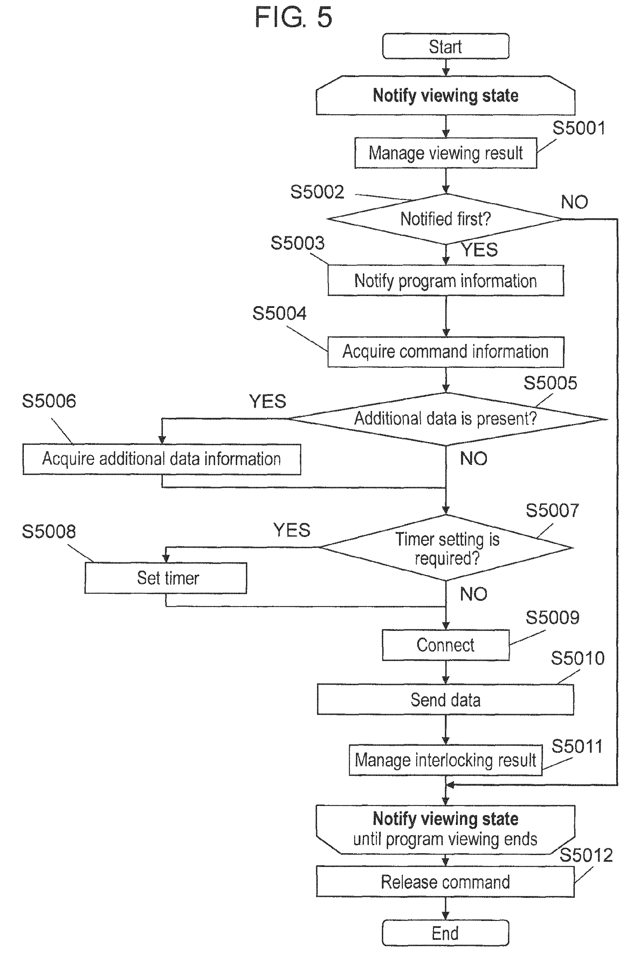

Next, the operation of repeating device 1200 will be described. FIG. 5 is a flowchart for describing the operation of repeating device 1200. Here, a description will be given on the assumption that the interlocking operation of rendering device 1300 is present in the program under viewing.

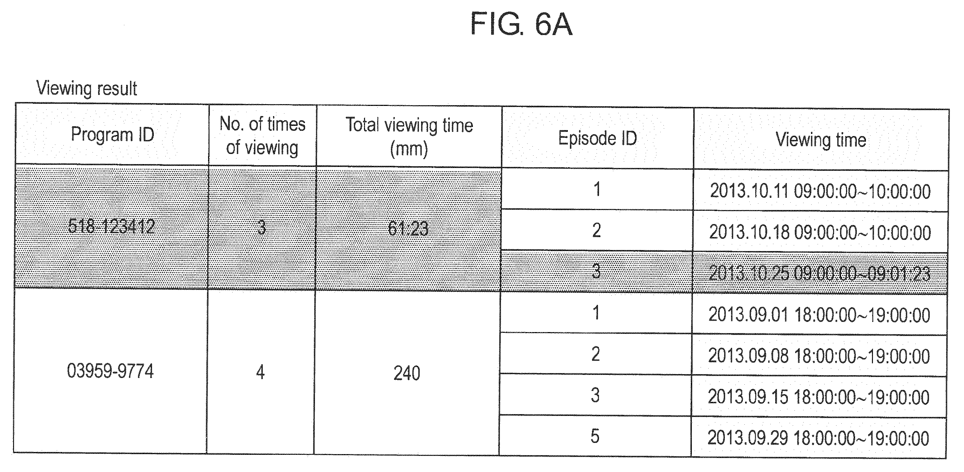

(S5001) Upon receiving the program information, viewing state determining unit 1201 of repeating device 1200 notifies viewing result manager 1202 of the program information. Viewing result manager 1202 updates the viewing result managed in viewing result manager 1202, based on the received program information. FIG. 6A is a diagram showing one example of the viewing result. The viewing result is made up of the program ID for identifying the program under viewing, a number of times of viewing on a basis of the program ID, a total viewing time on the basis of the program ID, the episode ID indicating the episode number of the program when the program is a series, and the viewing time on a basis of the episode ID.

In the one example of the program information in FIG. 4A, since the program ID is "518-123412", the episode ID is "3", that is, the third episode, and the viewing time is "00:01:23", upon receiving the one example of the program information in FIG. 4A, as shown in the one example of the viewing result in FIG. 6A, viewing result manager 1202 updates the viewing time in the viewing result of the program ID "518-123412" and the episode ID "3" to "2013. 10.25 9:00:00 - 9:01:23", based on a current time of day and the viewing time.

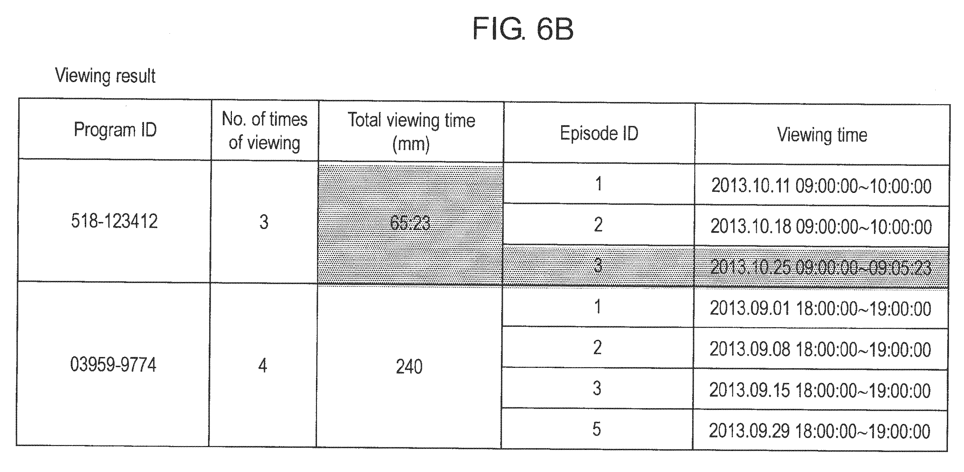

Furthermore, FIG. 4B shows another example of the program information, and it is assumed that the program information is notified as the next program information after the notification of the program information in FIG. 4A. In FIG. 4B, a different point from the program information in FIG. 4A is that the viewing time is "00:05:23". Viewing result manager 1202, which has received the program information in FIG. 4B, updates the viewing result. FIG. 6B shows another example of the viewing result. In FIG. 6B, the viewing time in the viewing result of the program ID "518-123412" and the episode ID "3" in FIG. 6A is updated to "2013. 10.25 9:00:00:00 - 9:05:23".

(S5002) It is determined whether or not the received program information is notified first from the start of the viewing of the program being currently viewed. If it is notified first (YES), the processing advances to S5003, and if it is not notified first (NO), the reception of the next program information is waited for.

(S5003) Viewing state determining unit 1201 notifies acquiring unit 1203 of the program information. Acquiring unit 1203 notifies command distributor 1002 of distribution device 1000 of the program ID and the episode ID to perform an acquisition request of command information 1013.

(S5004) Command distributor 1002 transmits command information 1013 corresponding to the notified program ID and episode ID, and acquiring unit 1203 receives this command information 1013.

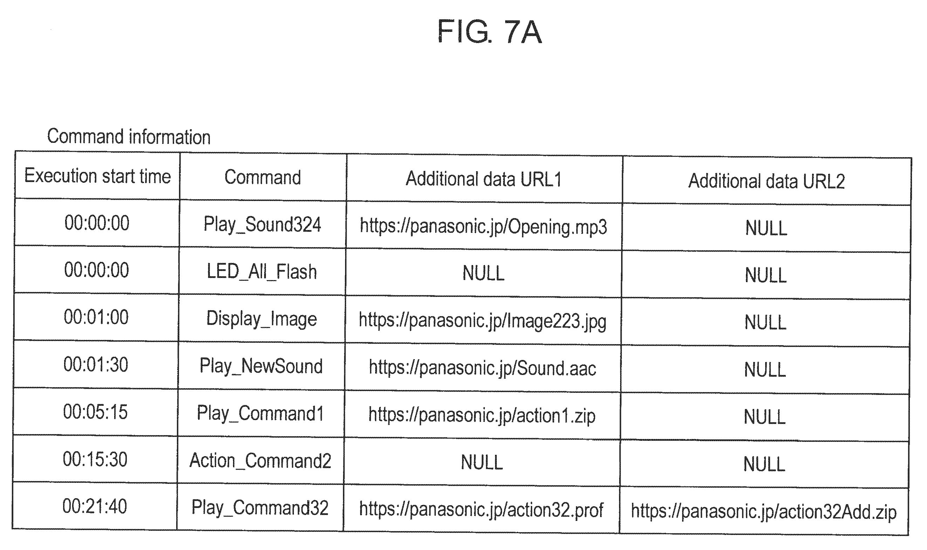

FIG. 7A is a diagram showing one example of the command information. Command information 1013 is made up of an execution start time, a command, and an URL of the additional data. The additional data may be absent for one command, one or two pieces of additional data may be present. The execution start time indicates an elapsed time from program start. In the one example of the command information in FIG. 7A, there are seven commands. In the first command, the execution start time is "00:00:00", the command is "Play_Sound324", and the URL of the additional data is "http://panasonic.jp/Opening.mp3", in the second command, the execution start time is "00:00:00", the command is "LED_All_Flash", and additional data is "NULL", that is, "absent", in the third command, the execution start time is "00:01:00", the command is "Display_Image", and the URL of the additional data is "http://panasonic.jp/Image223.jpg", in the fourth command, the execution start time is "00:01:30", the command is "Play_NewSound", and the URL of the additional data is "http://panasonic.jp/Sound.aac", in the fifth command, the execution start time is "00:05:15", the command is "Play_Command1", and the URL of the additional data is "http://panasonic.jp/Action1.zip", in the sixth command, the execution start time is "00:15:30", the command is "Action_command2", and the additional data is "absent", and in the seventh command, the execution start time is "00:21:40", the command is "Play_Command32", and the URLs of the additional data are "http://panasonic.jp/Action32.prof" and "http://panasonic.jp/Action32.zip".

Received command information 1013 notifies interlocking controller 1205.

(S5005) Acquiring unit 1203 determines whether or not the URL of additional data 1014 is present in received command information 1013. If the URL of additional data 1014 is present (YES), the processing advances to S5006, and if the URL of additional data 1014 is absent (NO), the processing advances to S5007. In the one example of the command information in FIG. 7A, the URL of the additional data is present, and thus, the processing advances to S5006.

(S5006) Acquiring unit 1203 acquires additional data 1014 from additional data distributor 1003. In the one example of the command information in FIG. 7A, there are six pieces of additional data 1014: "Opening.mp3", "Image223.jpg", "Sound.aac", "Action1.zip", "Action32.prof", and "Action32Add.zip". Acquired additional data 1014 is accumulated in accumulator 1204, and is notified to interlocking controller 1205.

(S5007) Interlocking controller 1205 determines whether or not a command requiring setting of a timer is present in command information 1013. Specifically, it is determined whether or not the command whose execution start time is the current time of day or later is present among the commands in the command information. In the one example of the command information in FIG. 7A, the first and second commands do not require the timer setting, and the five commands of the third command and later require the timer setting. If the timer setting is required (YES), the processing advances to S5008, and if the timer setting is not required (NO), interlocking controller 1205 sends command information 1013, additional data 1014, and the program information to connection unit 1206, and the processing advances to S5009.

(S5008) Interlocking controller 1205 manages a time until the execution start time for each of the commands requiring the timer setting, and when it reaches the execution start time, command information 1013, additional data 1014, and the program information are sent to connection unit 1206, and the processing advances to S5009.

(S5009) Connection unit 1206 performs connection to rendering device 1300 to be connected. For the connection, the rendering ID and the communication system for connecting rendering device 1300, which are included in the program information, are used. In the one example of the program information in FIG. 4A, the rendering ID is "TransformSword", and the communication system is "Bluetooth (registered trademark), and further, the connection profile is "GEOP". Connection unit 1206 thus connects to rendering device 1300, which is "TransformSword", using the connection profile GEOP of Bluetooth (registered trademark).

(S5010) When the connection to rendering device 1300 is established, connection unit 1206 transmits command information 1013 and additional data 1014 to connection unit 1301 of rendering device 1300.

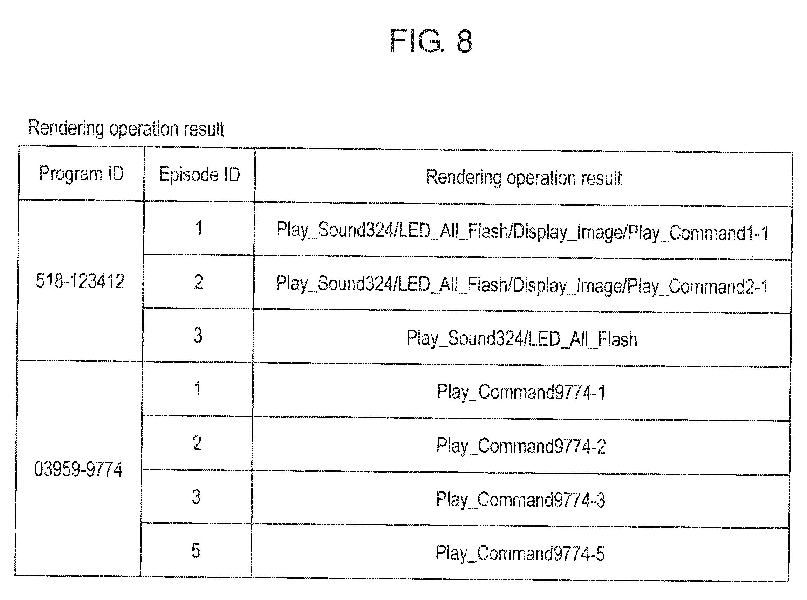

(S5011) Connection unit 1206 receives the rendering operation result indicating that the sent command has been executed from connection unit 1301 of rendering device 130, and updates the rendering operation result in interlocking result manager 1207. FIG. 8 is a diagram showing one example of the rendering operation result. The one example of the rendering operation result in FIG. 8 is made of the rendering operation result indicating what command has been executed with respect to the program ID and the episode ID. Specifically, it is illustrated that in the case where the program ID is "518-123412" and the episode ID is "3", the commands "Play_Sound324" and "LED_All_Flash" have been executed.

The operation in S5001 to S5011 is repeatedly carried out while the program information is being received.

(S5012) When the program information of the program, which was being viewed, is disabled to reach for a predetermined time, if the command subjected to the timer setting in S5008 is present with respect to rendering device 1300, the timer setting is released, and sending of the command is stopped. Furthermore, the connection to rendering device 1300 is also released.

### [1-2-4. Rendering Device Processing]

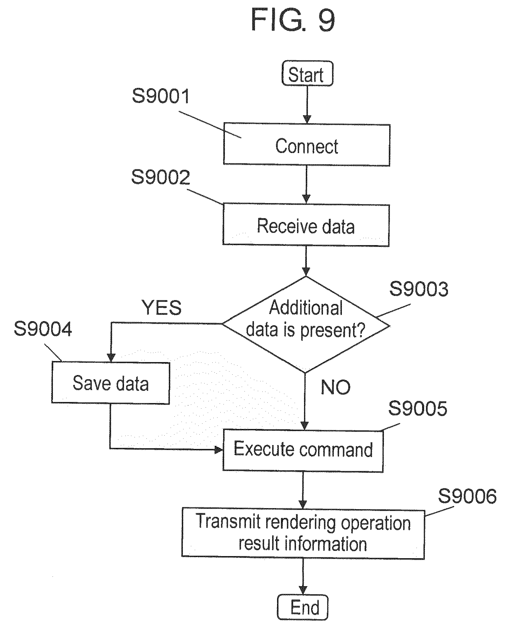

Finally, the operation of rendering device 1300 will be described. FIG. 9 is a flowchart for describing the operation of the rendering device according to the first exemplary embodiment.

(S9001) Connection unit 1301 of rendering device 1300 establishes the connection with respect to a connection request from connection unit 1206 of repeating device 1200, and waits for the data to be sent.

(S9002) Connection unit 1301 receives the data from connection unit 1206 of repeating device 1200. Connection unit 1301 transmits the received data to command controller 1302.

(S9003) Command controller 1302 checks whether or not additional data 1014 is present in the received data. If additional data 1014 is present (YES), the processing advances to S9004, and if additional data 1014 is absent (NO), the processing advances to S9005.

(S9004) If additional data 1014 is present, command controller 1302 accumulates additional data 1014 in accumulator 1303.

(S9005) Command controller 1302 executes the interlocking operation of rendering device 1300, using command information 1013 and additional data 1014 in the received data. Audio output unit 1304, video output unit 1305, LED 1306, and motor 1307 are operated in accordance with the content of the command.

(S9006) When the command is executed in command controller 1302, the rendering operation result of the executed command is sent to connection unit 1206 of repeating device 1200 through connection unit 1301.

As described above, repeating device 1200 specifies the program that receiving device 1100 is reproducing, and acquires the command information related to the program to transmit the command to rendering device 1300. This enables the rendering operation of rendering device 1300 to be implemented in the interlocked manner with the program viewing.

Moreover, if repeating device 1200 is disabled to receive the program information of the program, which was being viewed, from receiving device 1100, the timer setting for command issue set inside repeating device 1200 is released. This causes rendering device 1300 to execute the interlocking operation only when the program is being viewed, and inhibits rendering device 1300 from performing the rendering operation when the program is not viewed.

### [1-3. Effects]

As described above, in the present exemplary embodiment, the repeating device is made up of the viewing state determining unit that determines the viewing state of the program of the receiving device, the acquiring unit that acquires the command information and the additional data for the rendering operation related to the program of the rendering device, and the interlocking controller that determines whether or not the command information and the additional data are to be transmitted to the rendering device, based on the determination result of the viewing state determining unit.

The distribution device is made up of the program distributor that distributes the program content, the command distributor that transmits the command information related to the program content, and the additional data distributor that distributes the additional data related to the command included in the command information. The command distributor changes the command information to be transmitted to the repeating device, based on the viewing result of the receiving device received from the repeating device or the rendering operation result related to the program content of the rendering device.

The interlocking system is the interlocking system made up of the distribution device, the receiving device, the repeating device, and the rendering device, wherein the distribution device includes the program distributor that distributes the program content, the command distributor that transmits the command information for the rendering operation of the rendering device, the command information being related to the program content, and the additional data distributor that distributes the additional data related to the command information, the receiving device includes the receiver that receives the program content, and the viewing state notifier that transmits the program viewing state, the repeating device includes the viewing state determining unit that determines the program viewing state of the receiving device, the acquiring unit that acquires the command information and the additional data for the rendering operation related to the program of the rendering device, and the interlocking controller that determines whether or not the command information and the additional data are to be transmitted to the rendering device, based on the determination result of the viewing state determining unit, and the rendering device includes the command controller that receives and executes the command information and the additional data.

Furthermore, in the repeating device of the present exemplary embodiment, the interlocking controller transmits the command information and the additional data to the rendering device, when the determination result of the viewing state determining unit is that the program is under viewing.

This can change whether or not the rendering operation of the rendering device is to be performed, based on the viewing state of the program, and can promote the program viewing by a user.

### [1-4. Other Operation]

Furthermore, in the present exemplary embodiment, command information 1013 and additional data 1014 for the rendering device 1300 to perform the interlocking operation may be changed in accordance with the viewing result and the rendering operation result.

For example, if in S08 in FIG. 2, it is determined that the interlocking operation is present as the determination result of viewing state determining unit 1201, acquiring unit 1203 notifies distribution device 1000 of the program information to specify the program under viewing, and notifies distribution device 1000 of the viewing result and the rendering operation result of the program under viewing as well. For example, in the one example of the viewing result in FIG. 6A, when the third episode of the program ID "518-123412" is being viewed, a notification stating that the first and second episodes have been viewed may be performed as the viewing result. Furthermore, as the one example of the rendering operation result in FIG. 8, when the third episode of the program ID "518-123412" is being viewed, a notification stating that in the first episode, "Play_Sound324", "LED_all_Flash", "Display_Image", and "Play_command1-1" have been carried out, and in the second episode, "Play_Sound324", "LED_all_Flash", "Display_Image", and "Play_command2-1" have been carried out may be performed.

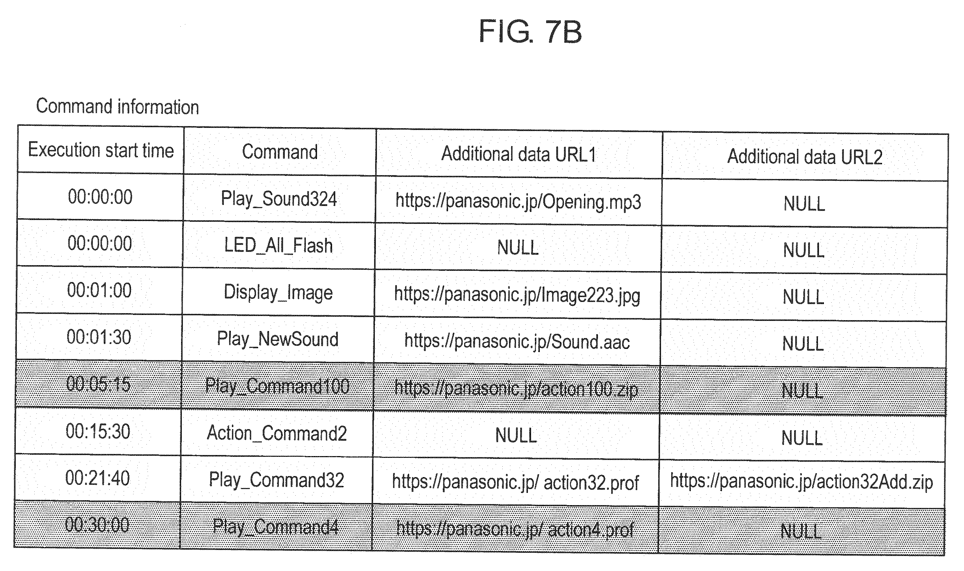

FIG. 7B shows another example of the command information received by acquiring unit 1203 as a result of notifying the viewing result or the rendering operation result. A different point from FIG. 7A is that the fifth command is changed from "Play_Command1" to "Play_Command100", the additional data is changed from "https://panasonic.jp/action1.zip" to "https://panasonic.jp/action100.zip", and the eighth command "Play_command4" and the additional data "https://panasonic.jp/action4. prof" are newly added.

As described above, repeating device 1200 further includes a manager that manages the determination result of the viewing state determining unit as the viewing result, and the acquiring unit acquires the command information and the additional data that are changed in accordance with the viewing result.

Moreover, repeating device 1200 further includes a manager that receives the rendering operation result related to the program from the rendering device to manage the same as the rendering operation result, and the acquiring unit acquires the command information and the additional data that are changed in accordance with the rendering operation result.

This can implement the rendering operation of rendering device 1300 in the interlocked manner with the viewing result or the rendering operation result, and promote continuous program viewing of the user.

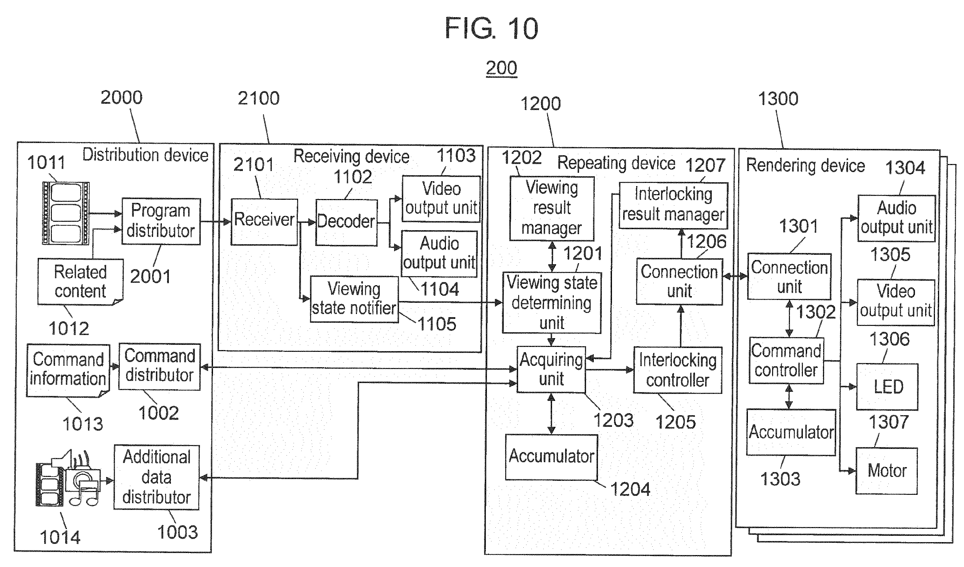

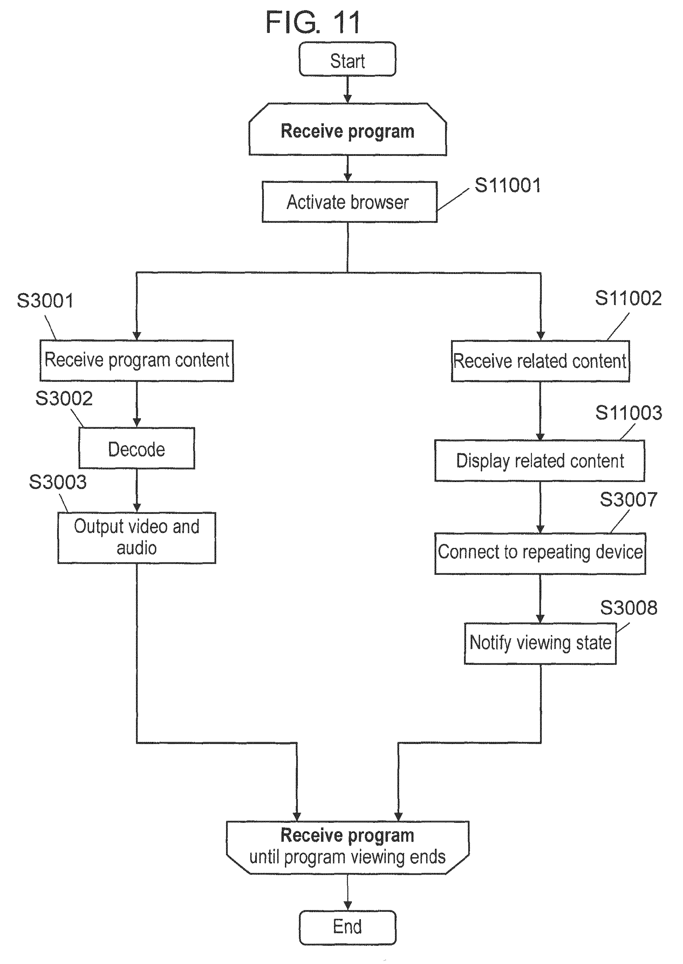

Moreover, while in the present exemplary embodiment, the program distributed by distribution device 1000 is transmitted by the broadcast wave, the program may be distributed by video-on-demand (hereinafter, VOD). FIG. 10 is a configuration diagram of another entire interlocking system according to the first exemplary embodiment. Interlocking system 200 is different from interlocking system 100 in distribution device 2000 and receiving device 2100. Distribution device 2000 is different from distribution device 1000 in program distributor 2001. Receiving device 2100 is different from receiving device 1100 in receiver 2101. Program distributor 2001 distributes the program by the VOD. Receiver 2101 receives program content 1011 by the VOD. FIG. 11 is a flowchart for describing operation of another receiving device according to the first exemplary embodiment, that is, a flowchart when the program is distributed by the VOD.

A description will be given, focusing on different points from the flowchart for describing the operation of receiving device 1100 in FIG. 3.

(S11001) Receiving device 2100 first activates the HTML browser. The HTML browser acquires an HTML, which is a menu page of the VOD, from program distributor 2001 of distribution device 2000 through receiver 2101, and acquires an HTML for a reproduction screen by a user operation to start reproduction of the VOD. Operation after reception of program content 1011 is S3001 to S3003, which is similar to that of receiving device 1100.

(S11002) Receiving device 2100 receives related content 1012 in receiver 2101 from program distributor 2001 of distribution device 2000.

(S11003) Related content 1012 is displayed in the activated HTML browser. Subsequent operation is S3007 to S3008, which is similar to that of receiving device 1100.

Furthermore, while the program distributed by distribution device 1000 is transmitted by the broadcast wave, and the program distributed by distribution device 2000 is distributed by the VOD, the distribution device may have both the distribution functions.

Furthermore, when rendering device 1300 is not connected to repeating device 1200, repeating device 1200 itself may perform the rendering operation, using command information 1013 and additional data 1014. This enables even a user not having rendering device 1300 to simulatively experience the rendering operation interlocked with the program, and can enhance buying inclination of the rendering device.

With respect to command information 1013 and additional data 1014 accumulated in repeating device 1200, rendering device 1300 may be adapted to perform the rendering operation not only during the program viewing but after the program viewing. In this case, only when the program viewing result is present, the rendering device 1300 may be enabled to perform the rendering operation.

Moreover, in the first exemplary embodiment, as one example of specification of the viewing program and the notification to repeating device 1200, means that viewing state notifier 1105 of receiving device 1100 specifies the program under viewing, and notifies viewing state determining unit 1201 of repeating device 1200 by the IP communication has been described. However, viewing state notifier 1105 and viewing state determining unit 1201 are not limited thereto. For example, a program being viewed may be specified from the output of audio output unit 1104, using an audio recognition technique. Specifically, a specific sound source is inserted into a predetermined frequency band of the audio data of program content 1011 to thereby superimpose and encode an audio fingerprint, and viewing state determining unit 1201 recognizes the audio output from audio output unit 1104, by which the audio fingerprint can be recognized as the program information superimposed on the audio. Furthermore, a BML is prepared as related content 1012 incidental to program content 1011, and a two-dimensional barcode for identifying the program is displayed on a video screen in the BML, and the video output from video output unit 1103 is recognized from a camera or the like, so that the program information superimposed on the video can be recognized.

As described above, in the present exemplary embodiment, in the repeating device, the determination of the viewing state determining unit is at least one of the determination by receiving the program information output from the receiving device, the determination by the audio output from the receiving device, and the video output from the receiving device.

This enables the determination of the viewing state of the program of receiving device in the repeating device.

While in the first exemplary embodiment, the viewing result and the rendering operation result are managed separately, they may be managed collectively.

### (Second Exemplary Embodiment)

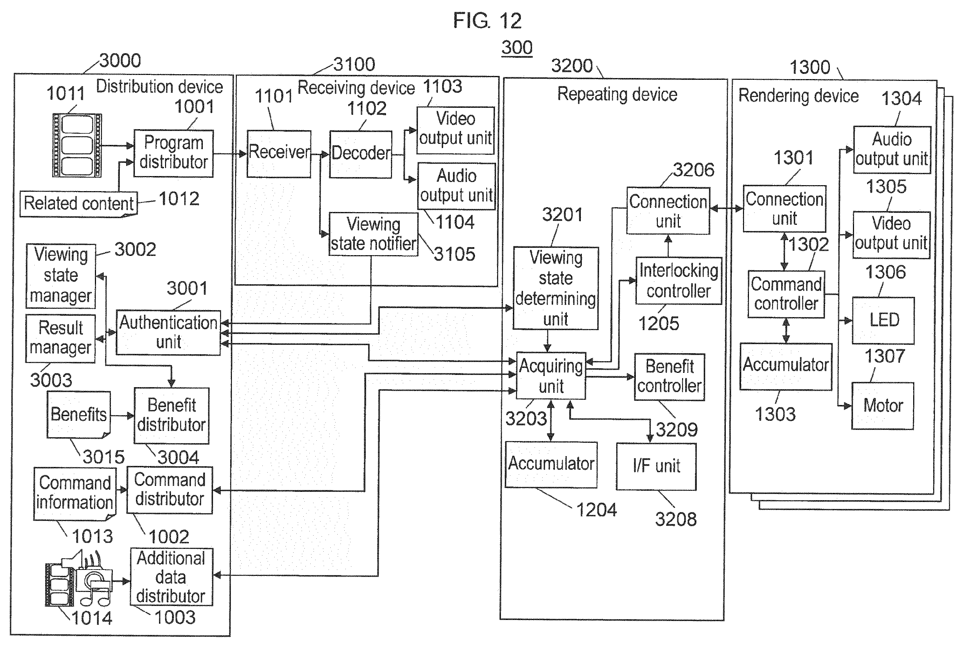

Hereinafter, with reference to FIGS. 12 to 18, a second exemplary embodiment will be described.

The present exemplary embodiment is different from the first exemplary embodiment in that a viewing result and a rendering operation result are managed in a distribution device, and that the viewing result and the rendering operation result are converted to miles to be accumulated for each user and the accumulated miles are used to obtain various services from a program content distribution business operator and a rendering device manufacturer as special benefits. Different points from the first exemplary embodiment will be mainly described in the present exemplary embodiment.

### [2-1. Configuration]

FIG. 12 is a configuration diagram of an entire interlocking system according to the second exemplary embodiment.

Interlocking system 300 is made up of distribution device 3000, receiving device 3100, repeating device 3200, and rendering device 1300.

Distribution device 3000 is made up of program distributor 1001, command distributor 1002, additional data distributor 1003, authentication unit 3001, viewing state manager 3002, result manager 3003, and benefit distributor 3004.

Program distributor 1001, command distributor 1002, and additional data distributor 1003 have the same configurations as those in the first exemplary embodiment.

Authentication unit 3001 performs management and authentication of a user ID and a password to perform the management of a viewing state and the management of the viewing result and the rendering operation result for each user in distribution device 3000.

Viewing state manager 3002 receives program information from receiving device 1100 to perform management as to whether or not program content 1011 being received by receiving device 3100 is under viewing.

Result manager 3003 manages the viewing result from the program information received from receiving device 3100. Furthermore, result manager 3003 receives the rendering operation result of rendering operation by rendering device 1300 from repeating device 3200 to manage the rendering operation result.

Benefit distributor 3004 receives an acquirement instruction of a benefit usable with respect to the held viewing result and rendering operation result and transmits benefit data 3015 to repeating device 3200. Benefit data 3015 is a command as an additional item that enables rendering operation of the rendering device 1300 to be additionally carried out, a game application interlocked with a program, a coupon that enables purchase of goods related to the program, a purchasing ticket of a toy related to the program, and so on.

Viewing state manager 3002, result manager 3003, and benefit distributor 3004 are connected to repeating device 3200 through authentication unit 3001. That is, the above three components can be connected after user authentication.

Receiving device 3100 is, for example, a TV receiver. Receiving device 3100 is made up of receiver 1101, decoder 1102, video output unit 1103, audio output unit 1104, and viewing state notifier 3105.

Receiver 1101, decoder 1102, video output unit 1103, and audio output unit 1104 have the same configurations as those in the first exemplary embodiment.

Viewing state notifier 3105 reads related content 1012 received in receiver 1101 to acquire the program information described in related content 1012, and transmit the program information to distribution device 3000. In the present exemplary embodiment, a description will be given on the assumption that related content 1012 is a content described in an HTML format, that viewing state notifier 3105 is an HTML browser, and that receiving device 3100 and distribution device 3000 are connected by IP communication.

Repeating device 3200 is, for example, a smartphone, a tablet terminal or the like. Repeating device 3200 is made up of viewing state determining unit 3201, acquiring unit 3203, accumulator 1204, interlocking controller 1205, connection unit 3206, I/F (InterFace) unit 3208, and benefit controller 3209.

Accumulator 1204 and interlocking controller 1205 have the same configurations as those in the first exemplary embodiment.

Viewing state determining unit 3201 inquires viewing state manager 3002 about the viewing state of receiving device 3100 through authentication unit 3001 of distribution device 3000, and receives the program information to determine the viewing state from the received program information. A determination result is output to acquiring unit 3203.

I/F unit 3208 has a function of displaying characters and images output as execution results of various types of processing from acquiring unit 3203. The function of displaying is configured by, for example, a liquid crystal monitor or an organic EL monitor. I/F unit 3208 further has a function of receiving an operation of the user and transmitting an operation signal thereof to acquiring unit 3203. The function of receiving the operation of the user is configured by buttons, a touch panel and the like. In the present exemplary embodiment, I/F unit 3208 instructs acquisition of the viewing result and the rendering operation result managed in distribution device 3000 and displays an acquired result, and instructs mile acquisition from the viewing result and the rendering operation result and displays a result thereof.

Based on the determination result of the viewing state, acquiring unit 3203 receives command information 1013 and additional data 1014 required for the interlocking operation of rendering device 1300 with respect to the program under viewing from command distributor 1002 and additional data distributor 1003 of distribution device 3000, respectively.

Furthermore, acquiring unit 3203 sends the rendering operation result received from connection unit 3206 to result manager 3003 of distribution device 3000 through authentication unit 3001.

Moreover, acquiring unit 3203 acquires the viewing result and the rendering operation result managed in result manager 3003, based on a result acquirement instruction from I/F unit 3208 to return an acquirement result to I/F unit 3208, and acquires miles managed in result manager 3003, based on a mile acquirement instruction from I/F unit 3208 to return an acquirement result to I/F unit 3208.

Furthermore, acquiring unit 3203 acquires benefit data 3015 from benefit distributor 3004, based on the acquired miles to transmit the data to benefit controller 3209.

Benefit controller 3209 performs control to execute received benefit data 3015.

Accumulator 1204 accumulates received command information 1013 and additional data 1014.

Interlocking controller 1205 controls execution of the interlocking operation of rendering device 1300, and issues a command for the interlocking operation to rendering device 1300.

Connection unit 3206 establishes connection to rendering device 1300 to transmit the command for the interlocking operation of rendering device 1300 and additional data 1014 corresponding to the command, and to receive the rendering operation result from rendering device1300. Here, communication means of repeating device 3200 and rendering device 1300 is not limited. For example, repeating device 3200 and rendering device 1300 may be connected by a wireless communication system such as Bluetooth (registered trademark) and Wi-Fi (registered trademark), or may be connected through a wired channel such as a USB and a serial bus cable. Furthermore, connection unit 3206 transmits the rendering operation result received from rendering device 1300 to acquiring unit 3203.

Rendering device 1300 has the same configuration as that of the first exemplary embodiment.

### [2-2. Rendering Operation]

The rendering operation of interlocking system 300 configured as described above will be described in the following.

### [2-2-1. Entire Sequence of Rendering Operation of Interlocking System]

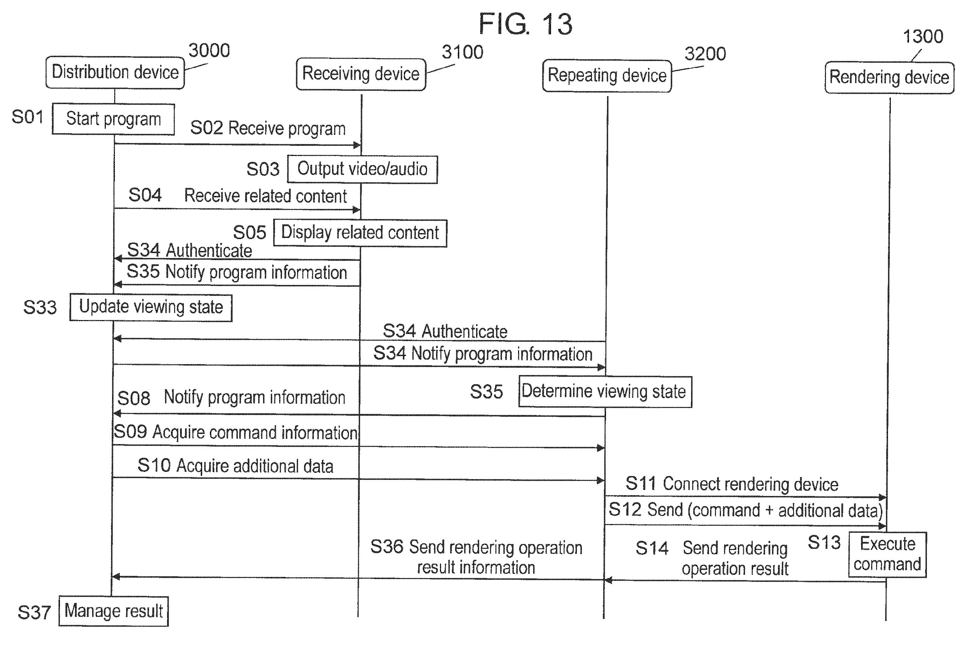

FIG. 13 is a diagram for describing an entire sequence of the rendering operation of the interlocking system in the present exemplary embodiment.

(S01) Distribution device 3000 prepares program content 1011 to be broadcasted, related content 1012, command information 1013, and additional data 104, and starts the distribution. For example, program content 1011 is distributed by a broadcast wave from a broadcasting server. Related content 1012, being a content described in the HTML format, is distributed from a WEB server by the IP communication. The distribution is performed in program distributor 1001. Moreover, command information 1013 and additional data 1014 are prepared in the WEB server.

(S02) Receiving device 3100 receives, in receiver 1101, program content 1011 distributed by distribution device 3000.

(S03) Received program content 1011 is decoded in decoder 1102 to be output as video data and audio data. The video data is output to video output unit 1103. The audio data is output to audio output unit 1104.

(S04) Receiving device 3100 receives related content 1012 distributed by distribution device 3000 at the same time as the reception of program content 1011.

(S05) Received related content 1012 is displayed, using an HTML browser.

(S31) Upon receiving program content 1011 and related content 1012, viewing state notifier 3105 of receiving device 3100 requests authentication unit 3100 of distribution device 3000 to perform authentication with the user ID and the password registered in advance. If these are not registered, the user ID and the password are acquired from authentication unit 3001.

(S32) Viewing state notifier 3105 notifies viewing state manager 3002 of distribution device 3000 of the program information. The notification of the program information is performed periodically at a predetermined timing during program viewing, that is, while program content 1011 and related content 1012 are being received.

(S33) Viewing state manager 3002 of distribution device 3000 manages the program information for each user ID, and manages the program information received each time the program information is notified. For example, the program information is the one example of the program information in FIG. 4A, which is similar to that of the first exemplary embodiment.

(S34) Viewing state determining unit 3201 of repeating device 3200 requests authentication unit 3001 of distribution device 3000 to perform authentication with the user ID and the password registered in advance. The user ID and the password used here are the same as the user ID and the password used in viewing state notifier 3105 of receiving device 3100. If the user ID and the password are not registered, the user ID and the password are acquired from authentication unit 3001. After the authentication by authentication unit 3001 has been completed, a reception request of the program information is performed to viewing state manager 3002. The reception request of the program information is periodically performed at a predetermined timing until the viewing of the program ends.

(S35) Upon receiving the notification of the program information from viewing state manager 3002 of distribution device 3000, viewing state determining unit 3201 of repeating device 3200 determines what the program being viewed is, and whether or not the interlocking operation corresponding to the program is present.

(S08) If as the determination result of viewing state determining unit 3201, it is determined that the interlocking operation is present, acquiring unit 3203 notifies distribution device 3000 of the program information to specify the program under viewing.

(S09) Command distributor 1002 of distribution device 3000 sends command information 1013 to acquiring unit 3203.

(S10) Moreover, additional data distributor 1003 of distribution device 3000 sends additional data 1014 to acquiring unit 3203.

(S11) Next, repeating device 3200 specifies connectable rendering device 1300 from received command information 1013, and searches for rendering device 1300 to connect the same.

(S12) When the connection to rendering device 1300 is completed, the command to be sent to rendering device 1300 is acquired from command information 1013, and timer setting and the like are performed so as to be able to execute the command at the command execution time.

(S13) When the execution time approaches, additional data 1014 corresponding to the command is issued from connection unit 3206 to rendering device 1300.

(S14) When connection unit 1301 of rendering device 1300 receives the command and additional data 1014 from repeating device 3200, command controller 1302 executes the command.

(S 15) A notification of the rendering operation result, which is a result of having executed the command, is sent from connection unit 1301 to repeating device 3200.

(S36) Connection unit 3206 of repeating device 3200 sends the rendering operation result received from connection unit 1301 of rendering device 1300 to acquiring unit 3203. Acquiring unit 3203 sends the received rendering operation result to result manager 3003 of distribution device 3000 through authentication unit 3001.

(S37) Result manager 3003 of distribution device 3000, which has received the rendering operation result, manages the result.

When the information notified from viewing state manager 3002 of distribution device 3000 is not reached for a predetermined time, and is timed out, viewing state determining unit 3201 of repeating device 3200 releases setting of the command being executed in rendering device 1300.

Next, details of operation in each of receiving device 3100 and repeating device 3200 will be described. Details of operation in rendering device 1300 will be omitted because they are similar to those of the first exemplary embodiment.

[2-2-2. Rendering Operation of Receiving Device]

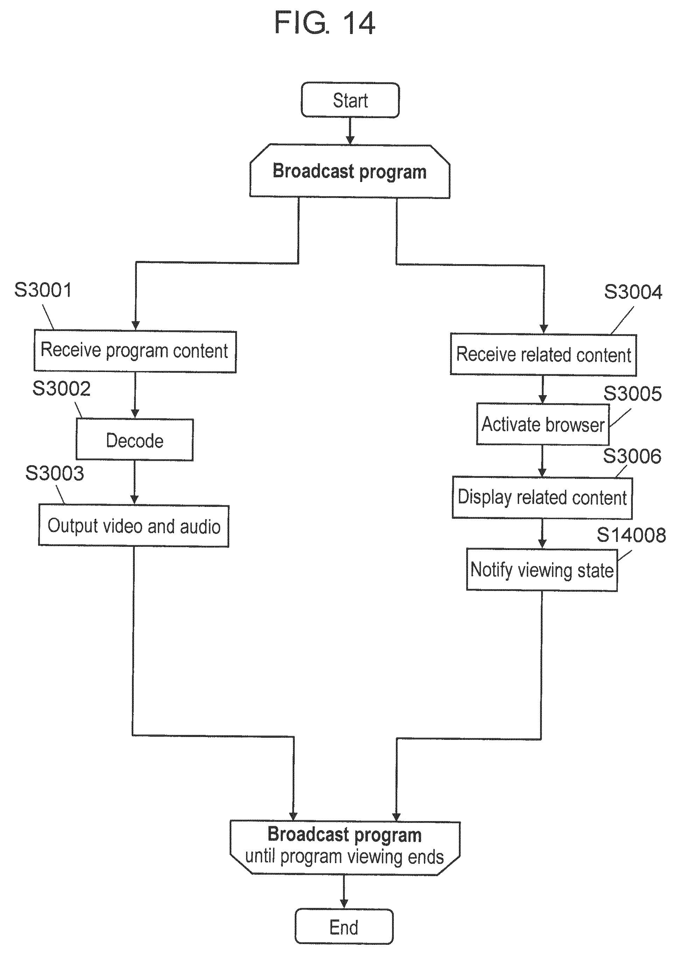

FIG. 14 is a flowchart for describing the rendering operation of receiving device 3100.

(S3001) Receiving device 3100 receives program content 1011 in receiver 1101 from program distributor 1001 of distribution device 3000.

(S3002) Received program content 1011 is decoded in decoder 1102 to obtain the video data and the audio data.

(S3003) The video data is output from video output unit 1103. The audio data is output from audio output unit 1104.

(S3004) Receiving device 3100 receives related content 1012 in receiver 1101 from program distributor 1001 of distribution device 3000.

(S3005) Since received related content 1012 is the content described in the HTML format, the HTML browser is activated.

(S3006) Related content 1012 is displayed in the activated HTML browser.

(S14008) Related content 1012 is the content described in the HTML format, and in related content 1012, a script to send the program information of the program being received to distribution device 3000 is programmed. In accordance with this script, viewing state notifier 3105 of receiving device 3100 establishes connection to authentication unit 3001 of distribution device 3000. After establishment of the connection, viewing state notifier 3105 requests authentication unit 3001 of distribution device 3000 to perform authentication with the user ID and the password registered in advance. If the user ID and the password are not registered, the user ID and the password are acquired from authentication unit 3001. Furthermore, in accordance with this script, viewing state notifier 3105 notifies viewing state manager 3002 of distribution device 3000 of the program information. The notification of the program information is performed periodically at the predetermined timing during the program viewing, that is, while program content 1011 and related content 1012 are being received. A description of the program information is similar to the content described with reference to FIG. 4A in the first exemplary embodiment, and thus, it will be omitted.

Operation from S3001 to S3006 and S14008 is repeatedly carried out from viewing start to viewing end of the program.

### [2-2-3. Rendering Operation of Repeating Device]

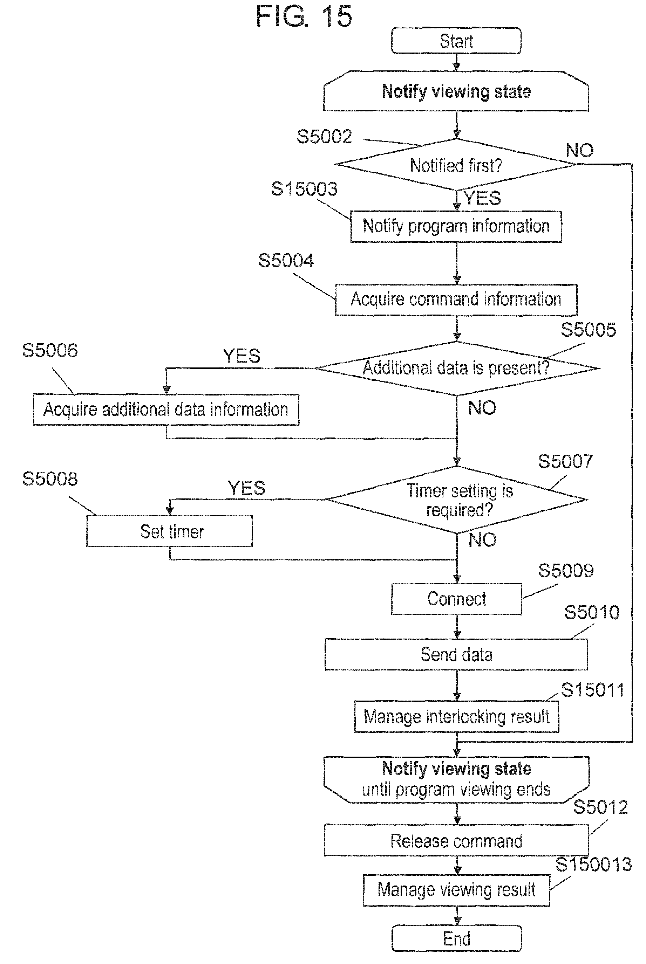

Next, the operation of repeating device 3200 will be described. FIG. 15 is a flowchart for describing the operation of repeating device 3200. Here, in the program under viewing, a description will be given on the assumption that the interlocking operation of rendering device 1300 is present.

(S5002) Upon receiving the program information, viewing state determining unit 3201 of repeating device 3200 determines whether or not the received program information is first notified from the viewing starting of the program being currently viewed. If it is notified first (YES), the processing advances to S15003, and if it is not notified first (NO), reception of the next program information is waited for.

(S15003) Viewing state determining unit 3201 notifies acquiring unit 3203 of the program information. Acquiring unit 3203 notifies command distributor 1002 of distribution device 3000 of a program ID and an episode ID to perform an acquisition request of command information 1013.

(S5004) Command distributor 1002 transmits command information 1013 corresponding to the notified program ID and episode ID, and acquiring unit 3203 receives this command information 1013.

A description of command information 1013 is similar to the content described with reference to FIG. 7A in the first exemplary embodiment, and will be thus omitted.

Received command information 1013 is notified to interlocking controller 1205.

(S5005) Acquiring unit 3203 determines whether or not an URL of additional data 1014 is present in received command information 1013. If the URL of additional data 1014 is present (YES), the processing advances to S5006, and if the URL of additional data 1014 is absent (NO), the processing advances to S5007. In the one example of the command information in FIG. 7A, the URL of the additional data is present, and thus, the processing advances to S5007.

(S5006) Acquiring unit 3203 acquires additional data 1014 from additional data distributor 1003. In the one example of the command information in FIG. 7A, there are six pieces of additional data 1014: "Opening.mp3", "Image2233.jpg", "Sound.aac", "Action1.zip", "Action32.prof", and "Action32Add. zip". Acquired additional data 1014 is stored in accumulator 1204, and is notified to interlocking controller 1205.

(S5007) Interlocking controller 1205 determines whether or not a command requiring setting of a timer is present in command information 1013. Specifically, it is determined whether or not the command whose execution start time is later than the current time of day is present among the commands in command information 1013. In the one example of the command information in FIG. 7A, the first and second commands do not require the timer setting, and the five commands of the third command and later require the timer setting. If the timer setting is not required (NO), the processing advances to S5009, and if the timer setting is required (YES), the processing advances to S5008. If the timer setting is not required, interlocking controller 1205 sends command information 1013, additional data 1014, and the program information to connection unit 1206.

(S5008) Interlocking controller 1205 manages a time until the execution start time for each of the commands requiring the timer setting, and when it reaches the execution start time, command information 1013, additional data 1014, and the program information are sent to connection unit 3206, and the processing advances to S5009.

(S5009) Connection unit 3206 performs connection to rendering device 1300 to be connected. For the connection, a rendering ID and the communication system for connecting rendering device 1300, which are included in the program information, are used. In the one example of the program information in FIG. 4A, the rendering ID is "TransformSword", and the communication system is "Bluetooth (registered trademark), and further, the connection profile is "GEOP". Connection unit 1206 thus connects to rendering device 1300, which is "TransformSword", using the connection profile GEOP of Bluetooth (registered trademark).

(S5010) When the connection to rendering device 1300 is established, connection unit 3206 transmits command information 1013 and additional data 1014 to connection unit 1301 of rendering device 1300.

(S15011) Upon receiving the rendering operation result indicating that the command sent from connection unit 1301 of rendering device 1300 has been executed, connection unit 3206 sends the rendering operation result to acquiring unit 3203. Acquiring unit 3203 sends the rendering operation result to result manager 3003 of distribution device 3000 through authentication unit 3001.

The operation from S5002, S15003, S5004 to S5010, and S15011 is repeatedly carried out while the program information is being received.

(S5012) When the reception of the program information of the program, which was being viewed, is disabled to reach for a predetermined time, if the command subjected to the timer setting in S5008 is present with respect to rendering device 1300, the timer setting is released, and sending of the command is stopped. Furthermore, the connection to rendering device 1300 is also released.

(S15013) Viewing state determining unit 3201 notifies acquiring unit 3203 of the program information received last. Acquiring unit 3203 sends the program information to result manager 3003 of distribution device 3000 through authentication unit 3001.

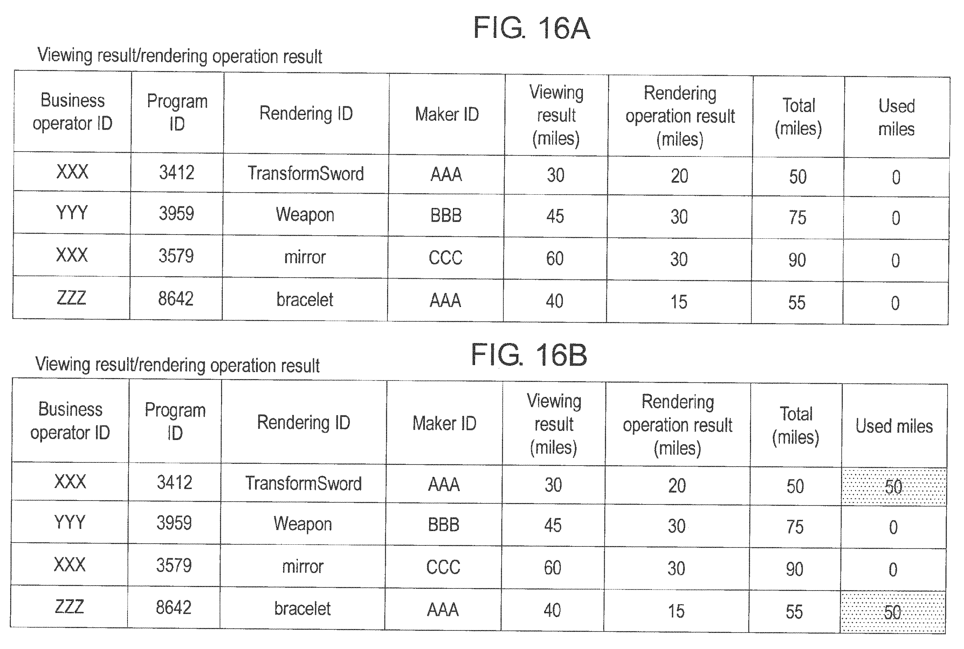

Here, the viewing result and the rendering operation result managed in result manager 3003 of distribution device 3000 will be described. FIG. 16A is a diagram showing one example of the viewing result and the rendering operation result. The viewing result and the rendering operation result are managed for each of the user IDs. The viewing result and the rendering operation result are managed collectively. The viewing result is calculated as miles by digitalizing a viewing time and a number of times of viewing by a predetermined calculation formula in place of the viewing time and the number of times of viewing. The rendering operation result is calculated as miles by digitalizing the executed command by a predetermined calculation formula in place of the executed command. Furthermore, not only the program ID and the rendering ID but a business operator ID specifying a program content distribution business operator that has produced the program content, and a maker ID specifying a rendering device maker that has manufactured the rendering device are also managed. Furthermore, if the miles have been used, a number of used miles is also managed.

The one example of the viewing result and the rendering operation result in FIG. 16A is an example in which 1 minute of the viewing time is converted to 1 mile, and one execution of the command is converted to 10 miles in the calculation formulae. In a sequence, the business operator ID is "XXX", the program ID is "3412", the rendering ID is "TransformSword", the maker ID is "AAA, the viewing result miles are "30", the rendering operation result miles are "20", a total of miles are "50, the used miles are "0", the business operator ID is "YYY", the program ID is "3959", the rendering ID is "Weapon", the maker ID is "BBB", the viewing result miles are "45", the rendering operation result miles are "30", the total of miles are "75, the used miles are "0", the business operator ID is "XXX", the program ID is "3579", the rendering ID is "mirror", the maker ID is "CCC", the viewing result miles are "60", the rendering operation result miles are "30", the total of miles are "90, the used miles are "0", the business operator ID is "ZZZ", the program ID is "8642", the rendering ID is "bracelet", the maker ID is "AAA", the viewing result miles are "40", the rendering operation result is "15", the total of miles are "55, and the used miles "0".

### [2-2-4. Rendering Operation of Rendering Device]

Since rendering operation of rendering device 1300 is the same as that of the first exemplary embodiment, a description will be omitted.

### [2-2-5. Benefit Acquisition Operation]

Next, operation of acquiring benefits using the miles saved by the viewing result and the rendering operation result will be described.

First, with reference to the one example of the viewing result and the rendering operation result in FIG. 16A, relationships between possessed miles and benefits will be described. As objects of the benefits, there are a benefit to the program, a benefit to the program content distribution business operator, and a benefit to the rendering device maker.

In FIG. 16A, as the programs, the four programs of the program IDs "3412", "3959", "3579", and "8642" are managed. Accordingly, as the benefits, the benefit can be acquired for each of the four programs. As the program content distribution business operators, the three program content distribution business operators of the business operator IDs "XXX", "YYY", and "ZZZ" are managed. Since with respect to the business operator ID "XXX", the two programs of "3412" and "3579" exist, the summation of the possessed miles 50 and 90 gives 140 miles as object miles, so that the benefit as the business operator ID "XXX" can be acquired. Moreover, as the rendering device maker, the three makers of the maker IDs "aha", "BBB", and "CCC" are managed. With respect to the maker ID "AAA", since the two programs of "3412" and "8642" exist, the summation of the possessed miles 50 and 55 gives 105 as the object miles, so that the benefit as the maker ID "AAA" can be acquired.

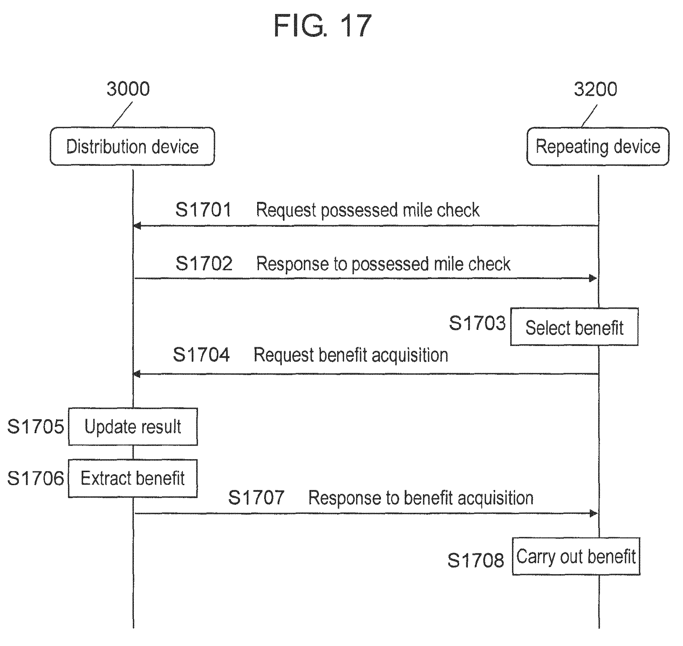

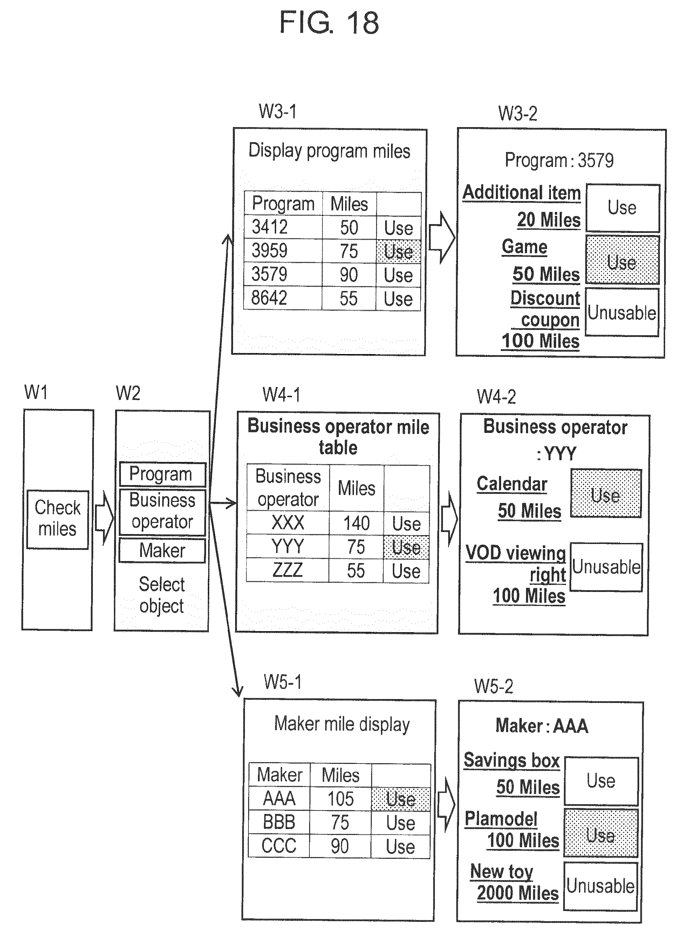

FIG. 17 is a diagram for describing a sequence of the benefit acquisition. FIG. 18 is a diagram for describing a user interface of the benefit acquisition in repeating device 3200. In FIG. 18, W1, W2, W3-1, W3-2, W4-1, W4-2, W5-1, and W5-2 denote display screens such as touch panels and the like included in I/F unit 3208. With reference to FIGS. 17 and 18, operation of acquiring the benefits will be described.

(S1701) The user performs an operation for checking the possessed miles from I/F unit 3208 of repeating device 3200. Specifically, an operation of selecting "Check miles" on display screen W1 is performed. Acquiring unit 3203, which has received a check instruction of the possessed miles, performs a check request instruction of the possessed miles to distribution device 3000.

(S1702) Result manager 3003 of distribution device 3000, which has received the check request instruction of the possessed miles, passes, to benefit distributor 3004, the viewing result and the rendering operation result of the user ID of the user whose request has been received. Benefit distributor 3004, which has received the viewing result and the rendering operation result, lists up the acquirable benefits, and sends to repeating device 3200 to response to the possessed mile check request.

(S1703) Acquiring unit 3203, which the response to the possessed mile check request has reached, instructs I/F unit 3208 to display a response content. I/F unit 3208 performs the display for the possessed miles and benefit selection to the possessed miles. Display screen W2 is a screen for selecting a benefit object to be acquired. As the objects, the "program", the "business operator", and the "maker" are displayed selectably, and the user selects any one. When the "program" is selected, the screen is switched to display screen W3-1, when the "business operator" is selected, the screen is switched to display screen W4-1, and when the "maker" is selected, the screen is switched to display screen W5-1.

Display screen W3-1 is a screen on which the usable miles are displayed for each of the programs, and specifically, 50 miles are usable with respect to the program ID "3412", 75 miles with respect to the program ID "3959", 90 miles with respect to the program ID "3579", and 55 miles with respect to the program ID "8642". An area in which "use" is displayed to select the program the benefit of which is desired to be acquired exists on a right side of the usable miles, and is displayed selectably.

Display screen W4-1 is a screen on which the usable miles are displayed for each of the program content distribution business operators, and specifically, 140 miles are usable with respect to the business operator ID "XXX", 75 miles with respect to the business operator ID "YYY", and 55 miles with respect to the business operator ID "ZZZ". An area in which "use" is displayed to select the program the benefit of which is desired to be acquired exists on a right side of the usable miles, and is displayed selectably.

Display screen W5-1 is a screen on which the usable miles are displayed for each of the rendering device makers, and specifically, 105 miles are usable with respect to the maker ID "AAA", 75 miles with respect to the maker ID "BBB", and 90 miles with respect to the maker ID "CCC". An area in which "use" is displayed to select the program the benefit of which is desired to be acquired exists on a right side of the usable miles, and is displayed selectably.

When the program ID "3959" is selected on display screen W3-1, the screen is switched to display screen W3-2. Display screen W3-2 is displayed so that the user can understand the acquirable benefits in the program ID "3959", a number of miles required for the benefit acquisition, and which benefit is acquirable with respect to the possessed miles. Specifically, as the benefit, "additional item" requires 20 miles, and an area in which "use" is displayed to indicate that this benefit is acquirable exists, and is displayed selectably. Furthermore, as the benefit, "game" requires 50 miles and is acquirable, and subsequently, as the benefit, "discount coupon" requires 100 miles, an area in which "unusable" is displayed to indicate that this benefit is unacquirable exists, and is displayed so that the selection is disabled. On display screen W3-2, the benefit "game" is selected.

When the business operator ID "YYY" is selected on display screen W4-1, the screen is switched to display screen W4-2. Display screen W4-2 is displayed so that the user can understand the acquirable benefits in the business operator ID "YYY", the number of miles required for the benefit acquisition, and which benefit is acquirable with respect to the possessed miles. Specifically, as the benefit, "calendar" requires 50 miles, and an area in which "use" is displayed to indicate that the benefit is acquirable exists, and is displayed selectably. Furthermore, as the benefit, "VOD viewing right" requires 100 miles and an area in which "unusable" is displayed to indicate that this benefit is unacquirable exists, and is displayed so that the selection is disabled. On display screen W4-2, the benefit "calendar" is selected.

When the maker ID "AAA" is selected on display screen W5-1, the screen is switched to display screen W5-2. Display screen W5-2 is displayed so that the user can understand the acquirable benefits in the maker ID "AAA", the number of miles required for the benefit acquisition, and which benefit is acquirable with respect to the possessed miles. Specifically, as the benefit, "savings box" requires 50 miles, and an area in which "use" is displayed to indicate that this benefit is acquirable exists, and is displayed selectably. Furthermore, as the benefit, "Plamodel (registered trademark)" is displayed so as to require 100 miles and be acquirable, and subsequently, as the benefit, "new toy" requires 2000 miles, and an area in which "unusable" is displayed to indicate that this benefit is unacquirable exists, and is displayed so that the selection is disabled. On display screen W5-2, the benefit "Plamodel (registered trademark)" is selected.

I/F unit 3208 sends the selected benefit information to acquiring unit 3203.

(S1704) Acquiring unit 3203, which has received the benefit information, performs a benefit acquisition request to distribution device 3000.

(S1705) Result manager 3003 of distribution device 3000, which has received the benefit acquisition request, updates used miles of the viewing result and the rendering operation result. For example, a case where the benefit "Plamodel (registered trademark)" is selected on display screen W5-2, and the benefit acquisition request is performed will be described. FIG. 16B is a diagram showing another example of the viewing result and the rendering operation result. On display screen W5-2, since the selected benefit "Plamodel (registered trademark)" requires 100 miles, the result corresponding to the maker ID "AAA" is updated so that 100 miles are changed to the used miles. In FIG. 16B, the updating is performed so that 50 miles are changed to the used miles from the program ID "3412" corresponding to the maker ID "AAA", and 50 miles are changed to the used miles from the program ID "8642".

(S1706) Benefit distributor 3004 of distribution device 3000, which has received the benefit acquisition request, retrieves benefit data 3015 corresponding to the benefit "Plamodel (registered trademark)".

(S1707) Benefit distributor 3004 transmits benefit data 3015 to repeating device 3200.

(S1708) Acquiring unit 3203 of repeating device 3200 sends received benefit data 3015 to benefit controller 3209. Benefit controller 3209, which has received benefit data 3015, carries out processing for the benefit, based on benefit data 3015.

### [2-3. Effects and the like]

As described above, in the present exemplary embodiment, in the repeating device, the acquiring unit acquires the benefit, based on the viewing result, which is the determination result of the viewing state determining unit, or the rendering operation result related to the program received from the rendering device. Furthermore, the benefit acquired by the acquiring unit is at least one of the benefit related to the program, the benefit regarding the business operator that produces the program content, and the benefit regarding the maker that manufactures the rendering device.

This can induce the user to view the program or to buy the rendering device.

While in the present exemplary embodiment, the viewing result and the rendering operation result are managed in the distribution device, they may be managed in the repeating device.

### INDUSTRIAL APPLICABILITY

The present disclosure can be applied to a repeating device, a distribution device, and an interlocking system that enable interlocking operation of a rendering device while providing an incentive in accordance with a viewing result of a program content. As the repeating device, the present disclosure can be applied to a smartphone, a portable telephone, a tablet terminal, a mobile PC, and the like.

### REFERENCE MARKS IN THE DRAWINGS

100, 200, 300 interlocking system
1000, 2000, 3000 distribution device
1001, 2001 program distributor
1002 command distributor
1003 additional data distributor
1100, 2100, 3100 receiving device
1101, 2101 receiver 1102 decoder
1103 video output unit
1104 audio output unit
1105, 3105 viewing state notifier
1011 program content
1012 related content
1013 command information
1014 additional data
1200, 3200 repeating device
1201, 3201 viewing state determining unit
1202 viewing result manager
1203, 3203 acquiring unit
1204, 1303 accumulator
1205 interlocking controller
1206, 1301, 3206 connection unit
1207 interlocking result manager
1300 rendering device
1302 command controller
1304 audio output unit
1305 video output unit
1306 LED
1307 motor
3001 authentication unit
3002 viewing state manager
3003 result manager
3004 benefit distributor
3015 benefit data

## Claims

1. A repeating device comprising:
a viewing state determining unit that determines a viewing state of a program in a receiving device;
an acquiring unit that acquires command information and additional data for rendering operation related to the program of a rendering device; and
an interlocking controller that determines whether or not the command information and the additional data are to be transmitted to the rendering device, based on a determination result of the viewing state determining unit.

2. The repeating device according to claim 1, wherein the interlocking controller transmits the command information and the additional data to the rendering device when the determination result of the viewing state determining unit is that the program is being viewed.

3. The repeating device according to claim 1, wherein the determination of the viewing state determining unit includes at least one of determination by receiving program information output from the receiving device, determination by audio output from the receiving device, and determination by video output from the receiving device.

4. The repeating device according to claim 1, further comprising a manager that manages the determination result of the viewing state determining unit as a viewing result,
wherein the acquiring unit changes the command information and the additional data to be acquired in accordance with the viewing result.

5. The repeating device according to claim 1, further comprising a manager that receives a rendering operation result related to the program from the rendering device to manage the rendering operation result,
wherein the acquiring unit changes the command information and the additional data to be acquired in accordance with the rendering operation result.

6. The repeating device according to claim 1, wherein the acquiring unit acquires a benefit, based on a viewing result which is the determination result of the viewing state determining unit, or a rendering operation result related to the program received from the rendering device.

7. The repeating device according to claim 6, wherein the benefit acquired by the acquiring unit includes at least one of a benefit related to the program, a benefit regarding a business operator that produces the program content, and a benefit regarding a maker that manufactures the rendering device.

8. An interlocking system comprising a distribution device, a receiving device, a repeating device, and a rendering device,
the distribution device comprising:
a program distributor that distributes a program content;
a command distributor that transmits command information for rendering operation of the rendering device, the command information being related to the program content; and
an additional data distributor that distributes additional data related to the command information,
the receiving device comprising:
a receiver that receives the program content; and
a viewing state notifier that transmits a program viewing state,
the repeating device comprising:
a viewing state determining unit that determines the program viewing state of the receiving device;
an acquiring unit that acquires the command information and the additional data for the rendering operation related to the program of the rendering device; and
an interlocking controller that determines whether or not the command information and the additional data are to be transmitted to the rendering device, based on a determination result of the viewing state determining unit, and
the rendering device comprising:
a command controller that receives and executes the command information and the additional data.

9. A distribution device comprising:
a program distributor that distributes a program content;
a command distributor that transmits command information related to the program content; and
an additional data distributor that distributes additional data related to a command included in the command information,
wherein the command distributor changes the command information to be transmitted to a repeating device, based on a viewing result of a receiving device received from the repeating device, or a rendering operation result related to the program content of a rendering device.

10. A processing method of a repeating device, comprising the steps of:
determining a program viewing state in a receiving device;
acquiring command information and additional data for rendering operation related to the program of a rendering device; and
determining whether or not the command information and the additional data are to be transmitted to the rendering device, based on a determination result of the viewing state.

11. A program for causing a computer to execute the steps of:
determining a viewing state of a program in a receiving device;
acquiring command information and additional data for rendering operation related to the program of a rendering device; and
determining whether or not the command information and the additional data are to be transmitted to the rendering device, based on a determination result of the viewing state.
